# NEUE EUROPÄISCHE PATENTSCHRIFT

(11) **EP 1 497 835 B2**
(45) Veröffentlichungstag und Bekanntmachung des Hinweises auf die Entscheidung über den Einspruch: **09.04.2014**
(45) Hinweis auf die Patenterteilung: 07.04.2010
(21) Anmeldenummer: 03725017.2
(22) Anmeldetag: 14.04.2003
(51) Int. Cl.: G21C 19/07

(54) **ZWISCHENLAGERSYSTEM FÜR BRENNELEMENTE AUS EINER KERNTECHNISCHEN ANLAGE SOWIE VERFAHREN ZUM BETREIBEN EINES DERARTIGEN ZWISCHENLAGERSYSTEMS**
INTERMEDIATE STORAGE SYSTEM FOR FUEL ELEMENTS FROM A NUCLEAR FACILITY, AND METHOD FOR OPERATING ONE SUCH INTERMEDIATE STORAGE SYSTEM
SYSTÈME DE STOCKAGE INTERMÉDIAIRE DESTINÉ À DES ÉLÉMENTS DE COMBUSTIBLE PROVENANT D'UNE CENTRALE NUCLÉAIRE ET PROCÉDÉ D'UTILISATION D'UN TEL SYSTÈME DE STOCKAGE INTERMÉDIAIRE

(30) Priorität: 22.04.2002 DE 10217969
(43) Veröffentlichungstag der Anmeldung: 19.01.2005
(73) Patentinhaber: AREVA GmbH, 91052 Erlangen (DE)
(72) Erfinder: BLINN, Klaus, 63322 Rödermark (DE); ARNS, Ludger, 91325 Adelsdorf (DE); BANCK, Joachim, 63150 Heusenstamm (DE); HÄNLE, Gerhard, 63179 Obertshausen (DE); KLAUS, Reinhold, 91058 Erlangen (DE); KOCH, Dietmar, 64293 Darmstadt (DE)
(74) Vertreter: Tergau & Walkenhorst
(86) Internationale Anmeldenummer: PCT/EP2003/003839
(87) Internationale Veröffentlichungsnummer: WO 2003/090233

(56) Entgegenhaltungen:
- EP-B1- 0 037 994
- DE-A- 2 944 962
- DE-A1- 1 564 546
- DE-B1- 2 823 376
- US-A- 4 404 165

## Beschreibung

Die Erfindung betrifft ein Zwischenlagersystem für Brennelemente aus einer kerntechnischen Anlage. Sie bezieht sich weiter auf ein Verfahren zum Betreiben eines derartigen Zwischenlagersystems.

Ein Zwischenlagersystem mit den Merkmalen des Oberbegriffs von Anspruch 1 ist aus der DE 29 44 962 A1 bekannt.

In kerntechnischen Anlagen, insbesondere in Kernkraftwerken, kommt üblicherweise nuklearer Brennstoff zum Einsatz, der in Hüllrohren gasdicht eingeschlossen ist. Eine Mehrzahl derartiger, den Brennstoff enthaltender Hüllrohre oder Brennstäbe bilden dabei jeweils ein Brennelement, das üblicherweise im Innern eines Reaktordruckbehätters eingesetzt wird. Die radioaktive Strahlung im Innern des Reaktordruckbehälters löst Kernreaktionen im nuklearen Brennstoff aus, durch die einerseits der Brennstoff Energie liefert und verbraucht wird, und durch die andererseits neue radioaktive Strahlung freigesetzt wird, die zur Aufrechterhaltung der Kernreaktionen nötig ist. Als nuklearer Brennstoff wird dabei üblicherweise angereichertes Uranoxid oder auch wiederaufbereiteter Brennstoff, insbesondere ein Mischoxid aus Uran und Plutonium, eingesetzt.

Sobald ein Brennelement bei seinem Betrieb mehr Neutronen verbraucht als durch die Kernreaktion in seinem Brennstoff entstehen, ist dieses Brennelement abgebrannt und wird durch ein frisches Brennelement ersetzt. Ein solchermaßen verbrauchtes Brennelement kann einer Wiederaufbereitung zur Rückgewinnung noch verwertbarer, spaltbarer Materialien zum Einsatz in einem neuen Brennelement oder alternativ auch einer Endlagerung zugeführt werden. Die Zuführung zur Endlagerung erfolgt dabei üblicherweise in einem dreistufigen Verfahren. In einer ersten Stufe wird dabei üblicherweise dem Umstand Rechnung getragen, dass ein frisch aus dem Reaktordruckbehälter entnommenes Brennelement noch derartig hochgradig aktiv ist, dass weder eine direkte Handhabung noch ein Transport über Land unmittelbar in Betracht kommen. In dieser Stufe wird das Brennelement noch so lange unter Wasser gelagert, bis seine Restaktivität und die dabei entstehende Nachzerfallswärme weitgehend abgeklungen sind. Diese Lagerung, die je nach Zustand des Brennelements über einen Zeitraum von bis zu einigen Jahren erforderlich sein kann, wird üblicherweise in einem sogenannten Abklingbecken direkt im Kernkraftwerk vorgenommen.

In einem zweiten Schritt erfolgt sodann üblicherweise eine sogenannte Zwischenlagerung der abgebrannten Brennelemente. Die Zwischenlagerung ist dabei vorgesehen, um die Restaktivität und die Nachzerfallswärme des jeweiligen Brennelements derart weit abklingen zu lassen, dass eine anschließende Verbringung in ein Endlager ohne zu hohen Wärmeeintrag ermöglicht ist. Bei der Zwischenlagerung werden die Brennelemente üblicherweise in speziell dafür konzipierte Transport- und Lagerbehälter verbracht, wie sie beispielsweise unter dem Namen "Castor" bekannt sind. In derartigen Behältern werden die Brennelemente geeignet gekapselt und von der Umwelt abgeschirmt vorgehalten, wobei eine vergleichsweise große Vielzahl derartiger Transport- und Lagerbehälter in einem zentralen Zwischenlager zusammengefasst werden kann. Ein derartiges Zwischenlagerkonzept wird auch als "Behälter-Trockenlagerung" bezeichnet.

Nach erfolgter Zwischenlagerung, d.h. üblicherweise nach einem Ablauf von etwa 50 bis 100 Jahren, und nachdem die Restaktivität und die Nachzerfallswärme des jeweiligen Brennelements auf einen Wert unterhalb eines für die Verbringung in ein Endlager zulässigen Grenzwerts abgeklungen sind, werden die Brennelemente in einer dritten Stufe in ein zugeordnetes Endlager verbracht. Dabei kann es sich beispielsweise um bergmännisch eingebrachte Hohlräume in Gebirgsstöcken handeln.

Das derzeit üblicherweise eingesetzte Konzept zur Verbringung von Brennelementen in die Endlagerung ist von seinen grundsätzlichen Vorgaben her im Wesentlichen auf eine standardmäßige Nutzung von Brennelementen in einem Wiederaufbereitungszyklus abgestimmt. Bei einem derartigen Betrieb von Brennelementen in einem Wiederaufbereitungslzyklus wird der Effekt genutzt, dass bei der Umwandlung des nuklearen Brennstoffs unter anderem auch neues spaltbares Material entsteht. Dieses kann bei geeigneter Separation aus dem Brennstoff zurückgewonnen und seinerseits als Brennstoff für ein neues Brennelement verwendet werden. Dabei ist allerdings zu berücksichtigen, dass zu Beginn des sogenannten Brennelementzyklus, also zu Beginn der typischen Einsatzzeit des jeweiligen Brennelements, die Erzeugungsrate des zusätzlich infolge der Kernreaktionen gewonnen Brennstoffs höher ist als dessen Abbau infolge der gerade laufenden Kernreaktionen. Mit zunehmender Betriebsdauer des Brennelements verschiebt sich dieser Effekt jedoch zunehmend zu Ungunsten der Erzeugungsrate des zusätzlichen spaltbaren Materials, bis schließlich auch der beim Einsatz des Brennelements erzeugte Brennstoff in stärkerem Maße durch die Kernreaktionen abgebaut als durch diese erzeugt wird. Bei einem auf Wiederaufbereitung beruhenden Konzept beim Einsatz der Brennelemente ist daher lediglich eine vergleichsweise kurze Betriebsdauer der Brennelemente vorgesehen, sodass im Zuge der Wiederaufbereitung noch eine vergleichsweise große Menge an neu erzeugtem Brennstoff rückgewonnen werden kann. Aus diesem Grund werden für eine Wiederaufbereitung vorgesehene Brennelemente, die einen ursprünglichen Anteil von beispielsweise etwa 3,5 bis 4% an spaltbarem Material in ihrem Brennstoff aufweisen, üblicherweise für einen durchschnittlichen Abbrand von etwa 40.000 eingesetzt. Sobald ein Brennelement einen derartigen Abbrand erreicht hat, erfolgt die Entnahme aus dem Reaktordruckbehälter und die anschließende Wiederaufbereitung zur Rückgewinnung des neu erzeugten spaltbaren Materials.

Alternativ kann es jedoch wünschenswert sein, bei der Nutzung eines Brennelements auf eine Wiederaufbereitung des Brennstoffs zu verzichten und statt dessen das Brennelement nach einer einmaligen Nutzung sofort einer Endlagerung zuzuführen. In diesem Fall ist es nicht erforderlich, bei der Grundauslegung des Brennelements und insbesondere bei der Vorgabe der Betriebsdauer für das Brennelement auch den mit der Zeit immer stärker einsetzenden Abbau des neu erzeugten spaltbaren Materials zu berücksichtigen. Derartige Brennelemente, die nicht für die Integration in einen Wiederaufbereitungszyklus vorgesehen sind, können daher beispielsweise mit einer Anfangskonzentration von etwa 5% an spaltbarem Material ausgelegt sein, wobei eine Entnahme aus dem Reaktordruckbehälter erst nach einem Abbrand von beispielsweise etwa 60.000 MWd/tU vorgesehen ist. Ohne die Berücksichtigung der für einen Wiederaufbereitungs-Zyklus notwendigen Randbedingungen ist somit eine vergleichsweise intensivere Nutzung des nuklearen Brennstoffs bei einer sofortigen Überführung der Brennelemente in eine Endlagerung möglich.

Hinsichtlich der Vorbereitung eines derartig intensiv genutzten Brennelements für eine Endlagerung entstehen jedoch zusätzliche Probleme bei der Handhabung derartiger Brennelemente. Infolge des vergleichsweise hohen Abbrands weist ein derartiges Brennelement nämlich eine besonders hohe Restaktivität und auch eine besonders hohe Nachzerfallswärme auf. Diese Parameter sind u. a. auch bedeutsam für die Zwischenlagerung der Brennelemente. Bei einer Trocken-Zwischenlagerung, also bei der Zwischenlagerung der Brennelemente in dafür vorgesehenen Transport- und Lagerbehältern, sind nämlich charakteristische Brennelement-Parameter wie beispielsweise die Hüllrohrtemperatur sowie die global abgegebenen Strahlungswerte begrenzend für die Packungsdichte und Beladung bei der Beschickung der Behälter mit den Brennelementen. Gerade bei der Behandlung von Brennelementen mit vergleichsweise hohem Abbrand und entsprechend erhöhter Nachzerfallswärme ist daher die Verwendung üblicher Transport- und Lagerbehälter nur möglich, indem die Beladungsdichte mit Brennelementen gravierend reduziert wird. Eine derartige Zwischenlagerung ist somit sehr aufwendig und auch kostenintensiv.

Der Erfindung liegt daher die Aufgabe zugrunde, ein Zwischenlagersystem für Brennelemente aus einer kerntechnischen Anlage anzugeben, das bei Einhaltung hoher Sicherheitsstandards mit besonders geringem Aufwand und in günstiger Art und Weise eine zuverlässige Zwischenlagerung auch von Brennelementen mit vergleichsweise hohem Abbrand erlaubt. Des Weiteren soll ein zum Betreiben eines derartigen Zwischenlagersystems besonders geeignetes Verfahren angegeben werden.

Bezüglich des Zwischenlagersystems wird diese Aufgabe erfindungsgemäß gemäß Anspruch 1 gelöst mit einem Nasslagerbecken, dessen Innenraum über einen zugeordneten, im Naturumlauf betreibbaren Sekundärkühlkreislauf rückkühlbar ist.

Die Erfindung geht dabei von der Überlegung aus, dass ein gerade auch zur Verarbeitung von Brennelementen mit vergleichsweise hohem Abbrand ausgelegtes Zwischenlagersystem in besonderem Maße zur Beaufschlagung mit der in diesem Fall zu erwartenden, vergleichsweise hohen Nachzerfallswärme geeignet sein sollte. Um dies auch bei angemessen hoher Packungs- oder Lagerdichte der Brennelemente und unter Einhaltung auch höchster Sicherheitsmaßstäbe zu ermöglichen, sollte unter Abkehr vom üblichen Konzept einer Trocken-Zwischenlagerung eine besonders intensive Kühlung auch einzelner Brennelemente vorgesehen sein. Dies ist durch die Ausrichtung des Zwischenlagersystems auf ein Nasslagerkonzept ermöglicht. Um bei einem derartigen Nasslagerkonzept einen besonders zuverlässigen Betrieb auch bei wechselnder Beladung mit Brennelementen sicherzustellen, sollte das für die Brennelemente vorgesehene Kühlmedium seinerseits rückkühlbar sein, sodass im eigentlichen Lagerraum für die Brennelemente, nämlich dem Nasslagerbecken, eine annähernd gleichbleibende Kühlmitteltemperatur einstellbar ist. Ein derartiges System ist auch bei langen Betriebsdauern mit besonders geringer Wartungsintensität und besonders zuverlässig betreibbar, indem die Rückkühlung unter weitgehendem Verzicht auf aktive Komponenten in der Art eines passiven Systems ausgestaltet ist. Dazu ist der zur Rückkühlung vorgesehene Sekundärkühlkreislauf zur Aufrechterhaltung einer Rückkühlzirkulation im Naturumlauf betreibbar.

Ein im Naturumlauf betreibbares System bezeichnet dabei einen Wärmetauscherkreislauf, bei dem die Zirkulation eines Kühlmediums über eine im Vergleich zu einer wärmeaufnehmenden Komponente geodätisch höher angeordnete wärmeabgebende oder ihrerseits rückgekühlte Komponente aufrechterhalten wird.

Die Rückkühlung des für die Brennelemente vorgesehenen, im Nasslagerbecken vorgehaltenen Kühlmediums, insbesondere Kühlwasser, erfolgt dabei über einen Wärmeeintrag in das im Sekundärkreislauf geführte Sekundärkühlmedium. Um dies zu ermöglichen, sind in den Sekundärkühlkreislauf vorteilhafterweise eine Anzahl von im Nasslagerbecken angeordneten Wärmetauschern geschaltet. Dabei ist eine besonders einfache und wartungsfreundliche Anordnung erreichbar, indem die Wärmetauscher in vorteilhafter Weiterbildung in das Nasslagerbecken eingehängt sind. Diese Bauweise, also die Verwendung von in das Nasslagerbecken eingehängten Wärmetauschern oder Kühlern, ermöglicht unter anderem auch wegen der dann oben liegenden Anschlüsse für die Zu- und Abfuhr des Sekundärkühlmediums ein besonders günstiges Störfallmanagement, da beispielsweise bei einer Leckage im Sekundärkühlkreislauf auf einfache Weise eine ersatzweise Bespeisung des Einhängekühlers beispielsweise über einen Feuerwehr-Wasseranschluß möglich ist. Bei dieser Bauweise ist unverändert eine zuverlässige Trennung des gegebenenfalls leicht kontaminierten Beckenwassers vom Sekundärkühlmedium gewährleistet.

Um seinerseits das im Sekundärkühlkreislauf zirkulierende Sekundärkühlmedium zuverlässig rückkühlen und somit in besonderem Maße ein gleichbleibendes Temperaturniveau im Nasslagerbecken einhalten zu können, sind die Wärmetauscher in weiterer vorteilhafter Ausgestaltung über den Sekundärkühlkreislauf mit einer Anzahl von Rückkühlelementen verbunden. Zur zuverlässigen Aufrechterhaltung des Naturumlaufs sind die Rückkühlelemente dabei vorteilhafterweise oberhalb der Wärmetauscher im Nasslagerbecken, in besonders vorteilhafter Ausgestaltung etwa fünf bis zehn Meter oberhalb der Wärmetauscher, positioniert.

Zur Einhaltung hoher Sicherheitsstandards ist das Nasslagerbecken in besonderem Maße gegen Leckagen selbst im Falle eines Rohrbruchs abgesichert. Dazu weist das Nasslagerbecken erfindungsgemäß unter konsequentem Verzicht auf Perforierungen oder Rohrdurchbrüche eine durchgängige Beckenwand, insbesondere ein Betonbeckenwand, auf. Eine derartige Bauweise in integraler Struktur ist in besonderem Maße begünstigt durch die Verwendung der in das Nasslagerbecken eingehängten Wärmetauscher, da diese von einem Bereich oberhalb des Nasslagerbeckens und somit unter Verzicht auf Durchbrüche durch die Beckenwand mit Sekundärkühlmedium bespeisbar sind. Des Weiteren ist eine derartige Bauweise in integraler Struktur besonders begünstigt durch eine Verwendung eines Umlauf- Reinigungssystems für das im Nasslagerbecken vorgehaltene Kühlmedium. Ein derartiges Umlauf-Reinigungssystem, bei dem das Kühlmedium im Umlauf über eine Anzahl von Umwälzpumpen über Reinigungsfilter geführt wird, ermöglicht die Einhaltung einer gleichbleibend hohen Qualität des Kühlmediums, ohne dass hierzu eine Perforierung des Bekkens erforderlich wäre.

Eine besonders fehlersichere und zuverlässige Ausgestaltung des Zwischenlagersystems ist erreichbar, indem das im Nasslagerbecken vorgehaltene Kühlmedium für die Brennelemente über eine Mehrzahl von redundant und unabhängig voneinander betreibbaren Elementen rückkühlbar ist. Dazu umfasst der Sekundärkühlkreislauf vorteilhafterweise eine Anzahl von sekundärkühlmittelseitig parallel geschalteten, unabhängig voneinander betreibbaren Teilsträngen.

Bezüglich des Verfahrens wird die genannte Aufgabe gelöst, indem ein in einem Nasslagerbecken zur Kühlung der Brennelemente vorgehaltenes Kühlmedium über einen Sekundärkühlkreislauf rückgekühlt wird, der im Naturumlauf betrieben wird. Die Zirkulation im Sekundärkühlkreislauf ist dabei in besonders einfacher und zuverlässiger Weise gewährleistet, indem der Naturumlauf vorteilhafterweise über ein im Vergleich zu einem vom Kühlmedium beheizten Wärmetauscher höher positioniertes Rückkühlelement aufrecht erhalten wird.

Gerade bei der bedarfsgerechten Behandlung von Brennelementen mit einem vergleichsweise hohen Abbrand von bis zu etwa 60.000 wird für das im Nasslagerbecken vorgehaltene Kühlmedium eine Temperatur von etwa 40° C bis etwa 45° C eingestellt.

Die mit der Erfindung erzielten Vorteile bestehen insbesondere darin, dass durch die Ausrichtung des Zwischenlagersystems auf ein Nasslagerkonzept auch Brennelemente mit vergleichsweise hoher Nachzerfallswärme in besonders hoher Beladungs- oder Packungsdichte zuverlässig zwischengelagert werden können. Gerade bei der Verwendung von Wasser als primäres Kühlmittel für die Brennelemente im Nasslagerbecken entsprechen die dortigen Lagerbedingungen in hohem Maße denen im Abklingbecken, sodass für diese beiden Stufen des Entsorgungskonzepts eine hohe Kompatibilität bei den Betriebsbedingungen erreichbar ist. Da bei einem derartigen Zwischenlagerkonzept auslegungsgemäß nur in zeitlich sehr geringem Umfang Be- oder Entladearbeiten am Nasslagerbecken durchzuführen sind, kann das Zwischenlagersystem für besonders geringen Wartungs- und Bedienaufwand ausgelegt sein. Dies ist besonders begünstigt durch die im Wesentlichen passive Ausgestaltung des Rückkühlsystems, bei dem das Sekundärkühlmedium im Naturumlauf und somit unter weitgehendem Verzicht auf aktive Komponenten geführt wird, wobei dennoch eine besonders hohe Betriebssicherheit gewährleistet ist.

Durch die Verwendung von Einhängekühlern, also von in das Nasslagerbecken eingehängten, in den Sekundärkühlkreislauf geschalteten Wärmetauschern, ist zudem eine integrale Struktur der Beckenwand des Nasslagerbeckens, also eine Struktur ohne Perforierungen oder Durchbrüche, erreichbar, so dass das Nasslagerbecken besonders gut gegenüber Leckagen abgesichert ist. Die einfacher und wartungsarme Bedienbarkeit des Zwischenlagersystems ermöglicht zudem in der Art einer dezentralen Gesamtstruktur, dass unter Verzicht eines groß dimensionierten Zwischenlagers eine Vielzahl vergleichsweise kleiner Zwischenlager vorgesehen sein können, die beispielsweise in unmittelbarere räumlicher Nähe zur jeweiligen kerntechnischen Anlage angeordnet sein können. Somit sind die zu bewältigenden Transportwege besonders kurz.

Ein Ausführungsbeispiel der Erfindung wird anhand einer Zeichnung näher erläutert. Darin zeigen:
- Figur 1: ein Zwischenlagersystem für Brennelemente im Grundriß in Aufsicht,
- Figur 2: das Zwischenlagersystem nach Figur 1 ausschnittweise im Längsschnitt, und
- Figur 3: ein Schaltschema eines Rückkühlsystems für das Zwischenlagersystem.

Gleiche Teile sind in allen Figuren mit denselben Bezugszeichen versehen.

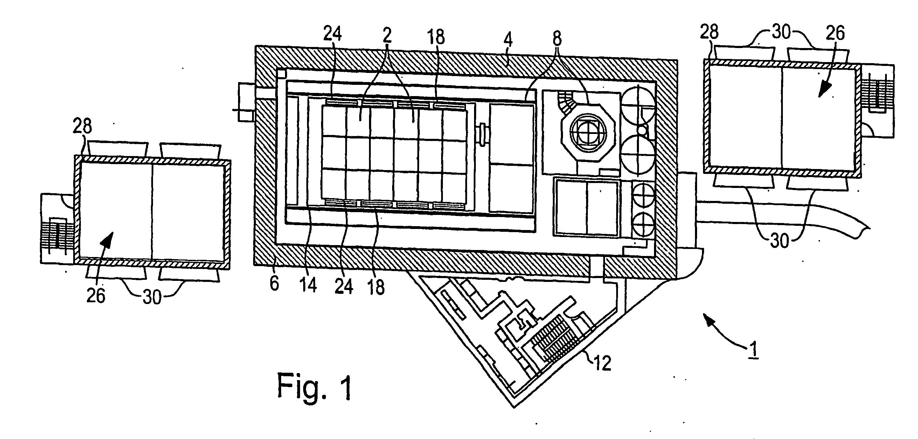

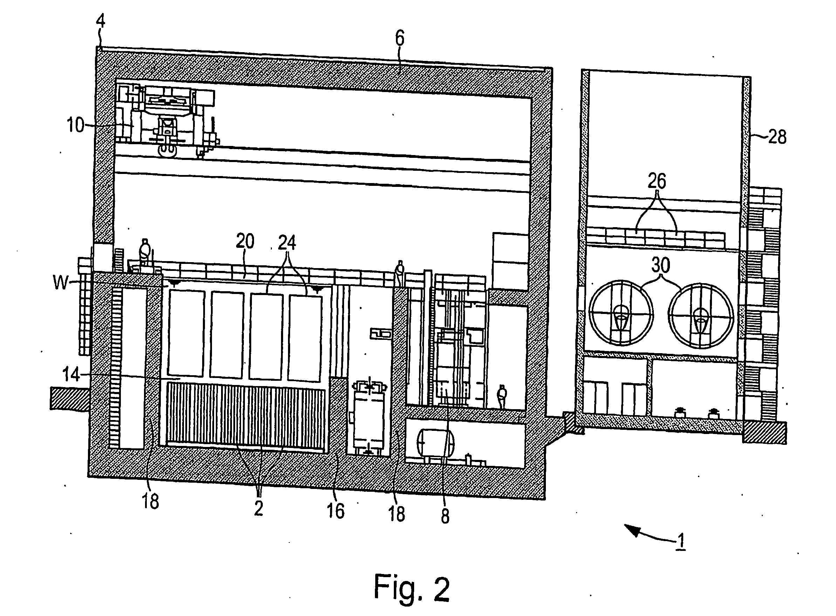

Das in Figur 1 in Aufsicht und in Figur 2 ausschnittsweise im Längsschnitt gezeigte Zwischenlagersystem 1 ist für eine bedarfsweise Zwischenlagerung von Brennelementen 2 vorgesehen, die in Figur 1 lediglich andeutungsweise gezeigt sind. Dazu umfasst das Zwischenlagersystem 1 ein Hauptgebäude 4, in dem Lagerpositionen für die Brennelemente 2 vorgesehen sind. Das Hauptgebäude 4 ist von einer geschlossenen, strukturell hochfesten Ummantelung 6, beispielsweise aus Beton, umschlossen, die hinsichtlich ihrer Festigkeit, Materialwahl und Wanddicke derart ausgelegt ist, dass sie auch erhebliche äußere Einwirkungen, wie beispielsweise einen Flugzeugabsturz, gänzlich oder zumindest nahezu unbeschädigt überdauert.

Innerhalb des Hauptgebäudes 4 ist eine Anzahl von herkömmlichen Bedien- oder Manipulationselementen 8 angeordnet, die zur bedarfsweisen Behandlung einzelner Brennelemente 2 ausgelegt sind. Des Weiteren ist im Hauptgebäude 4 ein verfahrbarer Trägerkran 10 vorgesehen, der bedarfsweise eine Umpositionierung von Brennelementen 2 innerhalb des Hauptgebäudes 4 ermöglicht. Außerhalb der Ummantelung 6 ist das Hauptgebäude 4 zudem in der Art eines Anbaus mit einem Systemtrakt 12 versehen, in dem neben technischen Betriebssystemen ein Treppenhaus sowie weitere Service-Komponenten angeordnet sind.

Das Zwischenlagersystem 1 ist in besonderem Maße auch auf eine Einsetzbarkeit für solche Brennelemente 2 hin ausgelegt, die von ihrem betrieblichen Konzept her nicht für einen Wiederaufbereitungszyklus, sondern vielmehr für eine Überführung in ein Endlager nach lediglich einmaligem Gebrauch hin ausgerichtet sind. Derartige Brennelemente 2 können bereits hinsichtlich der Zusammensetzung ihres nuklearen Brennstoffs entsprechend ausgelegt sein, wobei insbesondere im nuklearen Brennstoff ein Anteil von beispielsweise bis zu 5% an spaltbarem Material vorgesehen sein kann. Ein Einsatz derartiger Brennelemente 2 kann bis hin zu einem vergleichsweise hohen Abbrand von beispielsweise etwa 60.000 MWd/tU vorgesehen sein. Das Zwischenlagersystem 1 ist nunmehr derart ausgelegt, dass selbst Brennelemente 2 mit derartig hohen Abbrandwerten und entsprechend hoher Nachzerfallswärme unter vergleichsweise günstigen Bedingungen mit besonders geringem Aufwand zuverlässig und sicher zwischengelagert werden können.

Dazu ist das Zwischenlagersystem 1 nach dem Konzept einer Nass-Zwischenlagerung ausgerichtet. Die Lagerpositionen für die zwischenzulagernden Brennelemente 2 befinden sich dabei beim Zwischenlagersystem 1 in einem innerhalb des Hauptgebäudes 4 angeordneten Nasslagerbecken 14. Das Nasslagerbecken 14 ist durch eine hochfeste, strukturell sehr belastbare Beckenwanne 16 gebildet, die in ihren Seitenbereichen von einer durchgängigen Betonbeckenwand 18 begrenzt ist. Die Betonbeckenwand 18 ist dabei in dem Sinne durchgängig ausgebildet, dass unter Verzicht auf Perforierungen oder Rohrdurchbrüche eine durchgehend integrale Wandstruktur erhalten ist.

Innerhalb des Nasslagerbeckens 14 sind die Zwischenlagerpositionen für die Brennelemente 2 vorgesehen. Bei seiner Verwendung als Zwischenlager ist das Nasslagerbecken 14 bis hin zu einem durch die Linie 20 in Figur 2 angedeuteten Auslegungsfüllstand mit Kühlwasser W als Kühlmedium für die Brennelemente 2 befüllt. Die Kühlung der Brennelemente 2 erfolgt somit durch direkten Wärmetausch mit dem im Nasslagerbecken vorgehaltenen Kühlwasser W. Eine gleichbleibend effektive Kühlwirkung wird dabei durch sich im Nasslagerbecken 14 bildende Wasserwalzen und den damit verbundenen lokalen Medienaustausch sichergestellt.

Der Innenraum des Nasslagerbeckens 14 und somit das in diesem vorgehaltene Kühlwasser W ist seinerseits über einen Sekundärkühlkreislauf 22 rückkühlbar. Der Sekundärkreislauf 22 ist dabei für einen besonders geringen Wartungsaufwand bei hoher betrieblicher Sicherheit unter weitgehendem Verzicht auf aktive Komponenten, wie beispielsweise Pumpen, als im Wesentlichen passives System ausgebildet. Dazu ist der Sekundärkühlkreislauf 22 im Naturumlauf betreibbar. Zur eigentlichen Rückkühlung des Kühlwassers W ist in den Sekundärkühlkreislauf 22 eine Anzahl von im Nasslagerbekken 14 angeordneten Wärmetauschern 24 geschaltet. Die Wärmetauscher 24 sind dabei in das Nasslagerbecken 14 eingehängt, sodass zu ihrem zuverlässigen Betrieb keine Rohrdurchbrüche durch die Beckenwand 18 erforderlich sind. Durch die eingehängte Bauweise der Wärmetauscher 24 ist zudem eine besonders hohe Betriebssicherheit gewährleistet, zumal selbst bei einem Störfall mit Leckageverlusten zusätzliches Sekundärkühlwasser in die Wärmetauscher 24 auf besonders einfache Weise, beispielsweise über einen Feuerwehr-Wasseranschluß, eingespeist werden kann.

Die Wärmetauscher 24 sind ihrerseits über den Sekundärkühlkreislauf mit einer Anzahl von Rückkühlelementen 26 verbunden. Die Rückkühlelemente 26 sind dabei in außerhalb vom eigentlichen Hauptgebäude 4 positionierten Kühltürmen 28 angeordnet. Über den Sekundärkühlkreislauf 22 wird somit die vom Kühlwasser W aus den Brennelementen 2 aufgenommene Wärme über die Wärmetauscher 24 aufgenommen und an die Rückkühlelemente 26 weitertransportiert. Die Rückkühlelemente 26, die insbesondere als Luftwärmetauscher ausgebildet sein können, geben die Wärme dann in den Kühltürmen 28 an die Umgebungsatmosphäre ab. Zur besonderen Absicherung auch gegenüber möglichen Flugzeugabstürzen sind die Kühltürme 28 vergleichsweise weit voneinander entfernt positioniert, so dass in jedem Fall noch zumindest 50% der Kühlkapazität zur Verfügung sehen.

Zur zuverlässigen Aufrechterhaltung einer Zirkulation des Sekundärkühlmittels im Sekundärkühlkreislauf 22 durch Naturumlauf sind die Rückkühlelemente etwa fünf bis zehn Meter höher positioniert als die Wärmetauscher 24. Somit wird die Zirkulation im Sekundärkühlkreislauf 22 bereits durch die Beheizungsunterschiede bei den Wärmetauschern 24 einerseits und den Rückkühlelementen 26 andererseits sowie durch die unterschiedliche geodätische Höhe von Wärmetauschern 24 und Rückkühlelementen 26 aufrechterhalten, ohne dass ein weiterer aktiver Eingriff in das Zirkulationsverhalten des Sekundärkühlkreislaufs 22 erforderlich wäre. Zur Begünstigung oder Verstärkung der Rückkühlung der Rückkühleiemente 26 sind die Kühltürme 28 mit einer Anzahl von Fördergebläsen 30 oder Ventilatoren versehen.

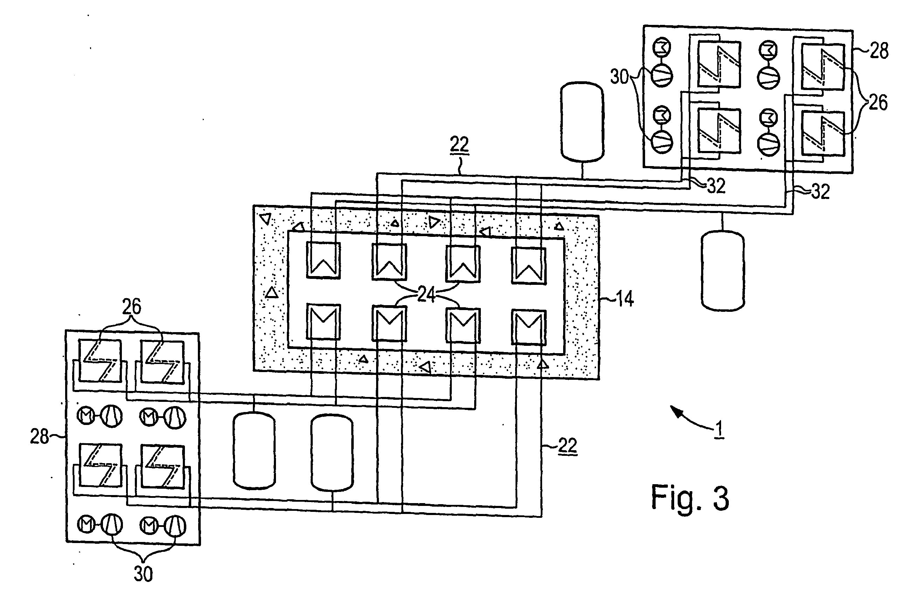

Für eine besonders hohe betriebliche Sicherheit ist der Sekundärkühlkreislauf 22, wie dies besonders aus dem Schaltschema nach Figur 3 hervorgeht, mehrsträngig ausgeführt. Der Sekundärkühlkreislauf 22 umfasst dazu eine Anzahl von sekundärkühlmittelseitig parallel geschalteten, unabhängig voneinander betreibbaren Teilsträngen 32, wobei jeder Teilstrang 32 im Ausführungsbeispiel jeweils zwei der im Nasslagerbecken 14 angeordneten Wärmetauscher 24 sekundärkühlmittelseitig mit einem zugeordneten Rückkühlelement 26 verbindet.

Das Zwischenlagersystem 1 ist aufgrund seiner Ausgestaltung nach dem NasslagerKonzept auch bei einer Beschickung mit Brennelementen 2 mit vergleichsweise hohem Abbrand besonders günstig und wartungsarm betreibbar. Eine hohe Betriebssicherheit ist dabei unter anderem auch dadurch begünstigt, dass im Sekundärkühlkreislauf 22 lediglich Sekundärkühlmittel zirkuliert, das nicht unmittelbar mit den Brennelementen 2 in Kontakt gerät. Somit ist selbst bei Rohrleckagen nicht mit dem Austritt von komtaminiertem Kühlmittel zu rechnen.

### Bezugszeichenliste

- 1: Zwischenlagersystem
- 2: Brennelemente
- 4: Hauptgebäude
- 6: Ummantelung
- 8: Manipulationselemente
- 10: Trägerkran
- 12: Systemtrakt
- 14: Nasslagerbecken
- 16: Beckenwanne
- 18: Betonbeckenwand
- 20: Linie
- 22: Sekundärkreislauf
- 24: Wärmetauscher
- 26: Rückkühlelemente
- 28: Kühltürme
- 30: Fördergebläse
- 32: Teilstrang

- W: Kühlwasser

## Patentansprüche

1. Zwischenlagersystem (1) für Brennelemente (2) mit einem Abbrand von bis zu 60.000 MWd/tU aus einer kerntechnischen Anlage mit einem Nasslagerbecken (14), dessen Innenraum über einen zugeordneten, im Naturumlauf betreibbaren Sekundärkühlkreislauf (22) rückkühlbar ist, in den eine Anzahl von im Nasslagerbecken (14) angeordnete Wärmetauscher (24) geschaltet ist, wobei die Wärmetauscher (24) in das Nasslagerbecken (14) eingehängt sind, und die Wärmetauscher (24) über den Sekundärkühlkreislauf (22) mit einer Anzahl von oberhalb des Auslegungsfüllstandes des Nasslagerbeckens (14) angeordneten Rückkühlelementen (26) verbunden sind,
**dadurch gekennzeichnet, dass**
das oder die Rückkühlelemente (26) 5 m bis 10 m oberhalb des jeweiligen Wärmetauschers (24) positioniert sind, und dass das Nasslagerbecken (14) eine durchgängige Betonbeckenwand (18) ohne Perforierungen oder Rohrdurchbrüche aufweist.

2. Zwischenlagersystem (1) nach Anspruch 1,
**dadurch gekennzeichnet, dass**
eine zusätzliche oder ersatzweise Bespeisung eines Wärmetauschers ermöglicht ist.

3. Zwischenlagersystem (1) nach Anspruch 2,
**dadurch gekennzeichnet, dass**
die Bespeisung über einen Feuerwehr-Wasseranschluss ermöglicht ist.

4. Zwischenlagersystem (1) nach Anspruch 1, bei dem ein Umlauf-Reinigungssystem für das im Nasslagerbecken (14) vorgehaltene Kühlmedium vorgesehen ist.

5. Zwischenlagersystem (1) nach einem der Ansprüche 1 bis 4, dessen Sekundärkühlkreislauf (22) eine Anzahl von sekundärkühlmittelseitig parallel geschalteten, unabhängig voneinander betreibbaren Teilsträngen (32) umfasst.

6. Zwischenlagersystem (1) nach Anspruch 5, bei dem jeder Teilstrang (32) jeweils zwei Wärmetauscher (24) sekundärseitig mit einem zugeordneten Rückkühlelement (26) verbindet.

7. Zwischenlagersystem (1) nach einem der vorhergehenden Ansprüche, bei dem ein Rückkühlelement (26) in Form eines Luftwärmetauschers ausgebildet ist.

8. Zwischenlagersystem (1) nach Anspruch 7, bei dem Rückkühlelemente (26) in mindestens zwei Kühltürmen (28) angeordnet sind.

9. Verfahren zum Betreiben eines Zwischenlagersystems (1) für Brennelemente (2) aus einer kerntechnischen Anlage, nach einem der Ansprüche 1 bis 8, bei dem ein in einem Nasslagerbecken (14) zur Kühlung der Brennelemente (2) vorgehaltenes Kühlmedium über einen Sekundärkühlkreislauf (22) rückgekühlt wird, der im Naturumlauf betrieben wird,
**dadurch gekennzeichnet, dass**
der Naturumlauf über ein im Vergleich zu einem vom Kühlmedium beheizten Wärmetauscher (24) um 5 m bis 10 m höher positioniertes Rückkühlelement (26) aufrecht erhalten wird, und
für das im Nasslagerbecken (14) vorgehaltene Kühlmedium eine Temperatur von 40 °C bis 45 °C eingestellt wird, wobei im Nasslagerbecken (14) Brennelemente mit einem Abbrand von bis zu 60.000 gelagert sind,
und dass das Nasslagerbecken (14) eine durchgängige Betonwand (18) ohne Perforierungen oder Rohrdurchbrüche aufweist.

## Claims

1. An interim storage system (1) for fuel elements (2) with a combustion of up to 60,000 MWd/tU from a nuclear facility, having a wet-storage pond (14) whose interior can be recooled via an associated secondary cooling loop (22) operable in natural circulation, into which a number of heat exchangers (24) arranged in the wet-storage pond (14) are inserted, the heat exchangers (24) being suspended in the wet-storage pond (14) and the heat exchangers (24) being connected, via the secondary cooling loop (22), with a number of recooling elements (26) arranged above the rated level of the wet-storage pond (14),
**characterized in that**
the recooling element(s) (26) are positioned 5 m to 10 m above the respective heat exchanger (24) and that the wet-storage pond (14) includes a continuous concrete pond wall (18) without perforations or pipe openings.

2. The interim storage system (1) according to claim 1,
**characterized in that**
an additional or substitutional feeding of a heat exchanger is possible.

3. The interim storage system (1) according to claim 2,
**characterized in that**
the feeding is possible through a fire-fighting water connection.

4. The interim storage system (1) according to claim 1 wherein a circulatory purifying system for the cooling agent stored in the wet-storage pond (14) is provided.

5. The interim storage system (1) according to any of claims 1 to 4, whose secondary cooling loop (22) comprises a number of partial branches (32) operable independently of each other and connected in parallel on the secondary cooling-agent side.

6. The interim storage system (1) according to claim 5, wherein each partial branch (32) connects two heat exchangers (24) on the secondary side with an associated recooling element (26).

7. The interim storage system (1) according to any of the preceding claims, wherein one recooling element (26) is designed in the form of an air heat exchanger.

8. The interim storage system (1) according to claim 7, wherein the recooling elements (26) are arranged in at least two cooling towers (28).

9. A method for operating an interim storage system (1) for fuel elements (2) from a nuclear facility according to any of claims 1 to 8, wherein a cooling agent stored in a wet-storage pond (14) for cooling the fuel elements (2) is recooled through a secondary cooling loop (22) operated in natural circulation,
**characterized in that**
the natural circulation is maintained through a recooling element (26) positioned 5 m to 10 m higher than a heat exchanger (24) heated by the cooling agent, and for the cooling agent stored in the wet-storage pond (14), a temperature of 40°C to 45°C is adjusted, fuel elements with a combustion of up to 60,000 MWd/tU being stored in the wet-storage pond (14), and that the wet-storage pond (14) includes a continuous concrete pond wall (18) without perforations or pipe openings.

## Revendications

1. Système de stockage temporaire (1) pour des éléments de combustible (2) avec une combustion de jusqu'à 60.000 MWd/tU venant d'une installation nucléaire, ayant une piscine de stockage humide (14) dont l'intérieur peut être refroidi de retour par un circuit de refroidissement secondaire (22) qui y est attribué, qu'on peut faire fonctionner en circulation naturelle et dans lequel un nombre d'échangeurs thermiques (24), ménagés dans la piscine de stockage humide (14), sont insérés, les échangeurs thermiques (24) étant suspendus dans la piscine de stockage humide (14) et les échangeurs thermiques (24) étant reliés, par le circuit de refroidissement secondaire (22), avec un nombre d'éléments de refroidissement de retour (26) ménagés au-dessus du niveau de conception de la piscine de stockage humide (14),
**caractérisé en ce**
**que** le(s) élément(s) de refroidissement de retour (26) sont positionnés de 5 m à 10 m au-dessus de l'échangeur thermique (24) respectif et que la piscine de stockage humide (14) comprend une paroi de piscine continue en béton (18) sans perforations ni passages de tuyaux.

2. Système de stockage temporaire (1) selon la revendication 1,
**caractérisé en ce**
**qu'**une alimentation additionnelle ou substitutionnelle d'un échangeur thermique est possible.

3. Système de stockage temporaire (1) selon la revendication 2,
**caractérisé en ce**
**que** l'alimentation est possible au moyen d'un raccord d'eau d'extinction d'incendie.

4. Système de stockage temporaire (1) selon la revendication 1, dans lequel est prévu un système de purification par circulation pour le fluide de refroidissement stocké dans la piscine de stockage humide (14).

5. Système de stockage temporaire (1) selon l'une quelconque des revendications 1 à 4, dont le circuit de refroidissement secondaire (22) comprend un nombre de branches partielles (32) qu'on peut faire fonctionner indépendamment l'une de l'autre et qui sont montées en parallèle sur le côté du fluide de refroidissement secondaire.

6. Système de stockage temporaire (1) selon la revendication 5, dans lequel chaque branche partielle (32) relie deux échangeurs thermiques (24) sur le côté secondaire avec un élément de refroidissement de retour (26) y attribué.

7. Système de stockage temporaire (1) selon l'une quelconque des revendications précédentes, dans lequel un élément de refroidissement de retour (26) est formé sous forme d'un échangeur thermique à air.

8. Système de stockage temporaire (1) selon la revendication 8, dans lequel les éléments de refroidissement de retour (26) sont ménagés dans au moins deux tours de refroidissement (28).

9. Procédé de faire fonctionner un système de stockage temporaire (1) pour des éléments de combustible (2) venant d'une installation nucléaire selon l'une quelconque des revendications 1 à 8, dans lequel un fluide de refroidissement stocké dans une piscine de stockage humide (14) pour refroidir les éléments de combustible (2) est refroidi de retour par un circuit de refroidissement secondaire (22) fonctionnant en circulation naturelle,
**caractérisé en ce**
**que** la circulation naturelle est maintenue au moyen d'un élément de refroidissement de retour (26) positionné de 5 m à 10 m plus haut qu'un échangeur thermique (24) chauffé par le fluide de refroidissement, et
**que** pour le fluide de refroidissement stocké dans la piscine de stockage humide (14), une température de 40°C à 45°C est réglée, des éléments de combustible avec une combustion de jusqu'à 60.000 MWd/tU étant stockés dans la piscine de stockage humide (14) et que la piscine de stockage humide (14) comprend une paroi de piscine continue en béton (18) sans perforations ni passages de tuyaux.
